# EUROPEAN PATENT APPLICATION

(11) **EP 3 444 772 A1**
(43) Date of publication of application: **20.02.2019**
(21) Application number: 17186601.5
(22) Date of filing: 17.08.2017
(51) Int. Cl.: G06Q 40/06

(54) **SYSTEM FOR AUTOMATED INVESTMENT ADVICE AND EXECUTION**

(71) Applicant: KBC Groep NV, 1080 Brussel (BE)
(72) Inventor: Van Rompaye, Bart, 3293 Kaggevinne (BE); Yaprakov, Dimitar, 1780 Wemmel (BE); Marquet, Ine, 3800 Sint-Truiden (BE); De Spiegeleer, Jan, 3110 Rotselaar (BE); Roegiers, Stefaan, 9620 Zottegem (BE); Chizi, Barak, 1150 Woluwe (BE)
(74) Representative: Brantsandpatents bvba

(57) **Abstract**

The current invention relates to a computing system for automated investment advice, said computing system comprising a server, the server comprising a processor, tangible non-volatile memory, program code present on said memory for instructing said processor; at least one computer-readable medium, the at least one computer-readable medium comprising a database, said database comprising investment-related data comprising: instrument knowledge data relating to historical performance of a plurality of financial instruments; client knowledge data relating to client risk, said client knowledge data comprising a questionnaire, said client knowledge data further comprising a plurality of pre-defined risk categories, each risk category comprising at least one pre-defined risk parameter value; said computing system configured for carrying out a method for calculating a risk-adhering portfolio, said method comprising the steps of: (a) providing a client with said questionnaire; (b) receiving a response to said questionnaire from said client; (c) based on said response, assigning said client to an assigned risk category belonging to said plurality of risk categories; (d) calculating said risk-adhering portfolio comprising a selection of at least one of said plurality of financial instruments, said calculating based at least on said instrument knowledge data and said assigned risk category; wherein said calculating in step (d) relates to maximizing an expected value of a portfolio return and/or minimizing an expected risk while adhering to said assigned risk category by comparing a value relating to said risk-adhering portfolio to said at least one pre-defined risk parameter value.

## Description

### Technical field

The invention pertains to the technical field investment advice and risk modeling for investment portfolios.

### Background

Accurately assessing the psychological risk tolerance and financial risk capacity of clients is one of the biggest challenges facing financial institutions. This is particularly important when advising clients on portfolios comprising risk-related assets such as equities.

US 8,756,140 describes computer-based systems and methods that generally relate to risk modeling for investment portfolios, such as equity investment portfolios. For example, a factor covariance matrix for a particular investment portfolio can be adjusted for known biases, including non-stationarity bias and optimization bias. In addition, new techniques for computing specific volatilities and relative specific volatilities for assets in a particular investment portfolio are disclosed. The method involves computing a factor covariance matrix (FCM) for the investment portfolio, comprising elements that are representative of a covariance of factor returns for investment portfolio for factors used to model risk of the portfolio. A diagonal covariance matrix has eigenfactors of FCM is adjusted to generate an adjusted diagonal covariance matrix. The adjusted diagonal covariance matrix is transformed to a non-diagonal adjusted factor FCM. A risk for the investment portfolio is computed based on non-diagonal adjusted FCM by the computer system. A problem with US 8,756,140 is that it does not disclose a client-specific risk profile.

US 2011/0270780 discloses a computer system comprising one or more servers that: [a] provide a financial personality assessment questionnaire to a user; and [b] receive data describing said user's responses to one or more questions in said questionnaire; and one or more processors in communication with said one or more servers that: [a] based on said data describing said user's responses, assess said user's investment-related attitudes across a plurality of scales and produce a multi-dimensional financial personality identifier for said user; and [b] construct a user risk profile for said user derived from said multi-dimensional financial personality identifier. A problem with US 2011/0270780 is that it does not disclose how a risk profile should be put to use in the generation of a portfolio.

The present invention aims to resolve at least some of the problems mentioned above.

The invention thereto aims to provide systems for automated investment advice that are able to calculate portfolios that adhere to a risk that is client-specific.

### Summary of the invention

The present invention provides a computing system for automated investment advice, said computing system comprising
- a server, the server comprising a processor, tangible non-volatile memory, program code present on said memory for instructing said processor;
- at least one computer-readable medium, the at least one computer-readable medium comprising a database, said database comprising investment-related data comprising:
   ∘ instrument knowledge data relating to historical performance of a plurality of financial instruments;
   ∘ client knowledge data relating to client risk, said client knowledge data comprising a questionnaire, said client knowledge data further comprising a plurality of pre-defined risk categories, each risk category comprising at least one pre-defined risk parameter value;
said computing system configured for carrying out a method for calculating a risk-adhering portfolio, said method comprising the steps of:
(a) providing a client with said questionnaire;
(b) receiving a response to said questionnaire from said client;
(c) based on said response, assigning said client to an assigned risk category belonging to said plurality of risk categories;
(d) calculating said risk-adhering portfolio comprising a selection of at least one of said plurality of financial instruments, said calculating based at least on said instrument knowledge data and said assigned risk category;
wherein said calculating in step (d) relates to maximizing an expected value of a portfolio return and/or minimizing an expected risk while adhering to said assigned risk category by comparing a value relating to said risk-adhering portfolio to said at least one pre-defined risk parameter value.

Characteristic of the computing system according to the present invention is its advantageous integration of investment advice and risk categorization. While investment advice is viewed separate from risk categorization in prior art systems, this is no longer practicable and by now highly inefficient, particularly in view of policy initiatives such as the Markets in Financial Instruments EU Directive 2004/39/EC (known as MiFID) and the recent Packaged Retail and Insurance-based Investment Products EU Regulation 1286/2014 (known as PRIIPs). Indeed, raising the client's awareness of the risk involved in investment has become imperative, and need not be seen separate from the actual investment advice. Rather, the present invention advantageously collects a response relating to risk from the client, thereby not only informing him of the risk involved, but also putting the response to good use in the creation of a portfolio. Hereby, the response is used in a specific and advantageous manner by comparing a value relating to said risk-adhering portfolio to said at least one pre-defined risk parameter value.

Another benefit of said system is its superior performance when compared to prior art systems. This is due to the fact that risk assessment forms an integral part of the calculation of the portfolio, allowing an optimization wherein risk is taken into account explicitly as a boundary condition. Hence, the algorithms used for optimization may seek for optimal portfolios within an expanded optimization space, wherein all boundary conditions applicable are taken into account at once, rather than in series. And, as known from optimization theory, a strategy taking into account all boundary conditions at once typically yields better results than a strategy whereby boundary conditions are applied one at a time. Prior art systems are an example of the latter strategy, calculating a portfolio in a first step, to only consider risk in a second, separate step.

All this is in contrast to the concept disclosed in US 8,756,140, which lacks means to take into account a response of the client with respect to risk. As a result, the system according to US 8,756,140 is unable to perform a joint optimization adhering to the risk category of the client while optimizing portfolio expectation. Related, US 8,756,140 lacks means for collecting client knowledge and determining the risk category of a given client. This also contrasts with US 2011/0270780, which does not disclose how a risk profile should be put to use in the generation of a portfolio that adheres to an optimization goal with respect to portfolio expectation. Related, US 2011/0270780 does not disclose how a joint optimization adhering to the preferences of the client while optimizing portfolio expectation can be effectuated.

In a preferred embodiment of the present invention, said step (d) comprises the sub-steps of
(d.1) for each of one or more financial instruments belonging to said plurality of financial instruments, based at least on said instrument knowledge data, calculating one or more moments of a probability distribution associated with an instrument return;
(d.2) calculating said risk-adhering portfolio based at least on the probability distributions calculated in step (d.1) associated with financial instruments belonging to said selection.

In a more preferred embodiment, said step (a) further comprises providing the client with a request for a client market-view preference; wherein said step (b) further comprises receiving said client market-view preference; wherein said calculating in step (d.1) is further based on said client market-view preference, thereby calculating an optimization constraint for each instrument relating to said client market-view preference.

Hereby, the "probability distribution associated with an instrument return" refers to the probability density function that can be associated with the financial return of a given instrument, whereby this financial return is a random variable. The financial return is hereby random in the sense that it is predicted from a limited number of moments, preferably four moments, in correspondence with an appropriate reference such as the Cornish-Fisher equation. This probability density function comprises a variety of information regarding the instrument return, such as the expected value of the instrument return (first moment), its variance (function of first and second moment) and higher moments of the instrument return, as well as tail probabilities. Furthermore, "client market-view preference" refers to any view, belief, insight or conviction that the client has with respect to the financial market. This may e.g. concern a particular financial instrument of which the client believes that it is particularly promising or reliable, or it may concern a view on a certain industry sector as having large growth potential. Similar remarks can be made for a probability distribution associated with a risk, whereby the expected risk corresponds to the expected value of the risk (first moment), and higher moments can likewise be defined.

Such an embodiment is particularly advantageous since it provides the client with the ability to "inject" his/her beliefs and insights, i.e. the client market-view preference, into the system as additional boundary conditions. This allows the client to partially steer the investment advice in a desired direction. The way in which the beliefs and insights are introduced in the system is particularly advantageous, since the modification of probability distributions can be done "at libitum", i.e. without any limit on the number or nature of the client market-view preferences, in step (d.1), without requiring changes to the calculation approach followed in step (d.2). In a related embodiment, the choice of beliefs and insights is subject to some limitation relating to their formulation as modification of the optimization constraint, but still allows considerable "steering". Hence, the system provides an elegant and efficient solution to the need for an integrated approach to risk-adhering investment advice which incorporates a means for the client to steer the investment advice.

In a second aspect, the present invention provides a risk-adhering portfolio produced by the computing system according to the present invention, said risk-adhering portfolio comprising a visualization either on a screen of a client device of said client or on a print-out of data received on said client device of said client; said risk-adhering portfolio comprising said selection of said at least one of said plurality of financial instruments, said expected return and a description relating to said assigned risk category.

Further embodiments and their advantages are discussed in the detailed description and the claims.

### Description of figures

**Figure 1** shows a flow chart illustrating a first example embodiment of a system according to the present invention.
**Figure 2** shows a flow chart illustrating a second example embodiment of a system according to the present invention.
**Figure 3** provides an example illustrating an aspect of the present invention relating to risk categories.
**Figure 4** shows an example of a portfolio universe relating to the present invention.
**Figure 5** shows an example of a probability distribution and related parameters relating to the present invention.

### Detailed description of the invention

In a first aspect, the present invention provides computing system for automated investment advice, said computing system comprising
- a server, the server comprising a processor, tangible non-volatile memory, program code present on said memory for instructing said processor;
- at least one computer-readable medium, the at least one computer-readable medium comprising a database, said database comprising investment-related data comprising:
   ∘ instrument knowledge data relating to historical performance of a plurality of financial instruments;
   ∘ client knowledge data relating to client risk, said client knowledge data comprising a questionnaire, said client knowledge data further comprising a plurality of pre-defined risk categories, each risk category comprising at least one pre-defined risk parameter value;
said computing system configured for carrying out a method for calculating a risk-adhering portfolio, said method comprising the steps of:
(a) providing a client with said questionnaire;
(b) receiving a response to said questionnaire from said client;
(c) based on said response, assigning said client to an assigned risk category belonging to said plurality of risk categories;
(d) calculating said risk-adhering portfolio comprising a selection of at least one of said plurality of financial instruments, said calculating based at least on said instrument knowledge data and said assigned risk category;
wherein said calculating in step (d) relates to maximizing an expected value of a portfolio return and/or minimizing an expected risk while adhering to said assigned risk category by comparing a value relating to said risk-adhering portfolio to said at least one pre-defined risk parameter value.

Hereby, the instrument knowledge data preferably comprises information also on the character of the financial instruments, such as a relation of an instrument to a certain geographical region or a certain sector. Furthermore, said questionnaire preferably relates to specific client preferences such as a preference with respect to a certain geographical region or sector, with further preference so that it may be connected to the character of one of the financial instrument belonging to said plurality of financial instruments. In such an embodiment, the calculation in step (d) should preferably also take into account at least one of said client preferences.

In a preferred embodiment, each risk category is defined as a pre-determined range of allowed values for the risk parameter, said range preferably being updated regularly.

In a preferred embodiment of the invention, said calculating in step (d) involves determining a threshold λ relating to a variance of said portfolio return; and wherein said calculating in step (d) entails that said threshold λ adheres to said risk category, preferably that said threshold λ remains below one of said at least one pre-defined risk parameter value belonging to said assigned risk category. This is advantageous because the variance is indicative of volatility and is critical in assessing the risk associated with portfolios and financial instruments in general. In an alternative embodiment, said threshold λ is associated with a horizon H, and each threshold value is associated with a horizon value, e.g. short periods of 10 days or 20 days, more preferably long periods such as 5 years or 20 years. Typically, threshold values associated with large horizon values are smaller than threshold values associated with small horizon values. This is related to the fact that the prediction of the expected value of the return is highly sensitive to short-term variations of the return of an instrument or of the portfolio. However, these short-term variations tend to average out as the horizon value increases.

In a further preferred embodiment, the calculation in step (d) takes into account a pre-determined maximum that can be assigned to a single financial instrument and/or ETF. This is advantageous since it prevents the risks and unpredictability associated with a concentration of the portfolio on a limited number of financial instruments and/or ETFs.

In another preferred embodiment, the system monitors the external conditions such as market conditions / natural evolution of the stock market. Hereby, the surpassing of a certain threshold of one of the monitored external conditions causes the system to send an alert to the client, preferably advising him/her to rebalance his portfolio. In a preferred embodiment, said monitoring and alerting relates to a periodic re-execution of step (c) and/or step (d). This allows to ensure that the risk category still adheres to the client needs and the external conditions. Likewise, it ensures that the portfolio still adheres to the risk associated with said client.

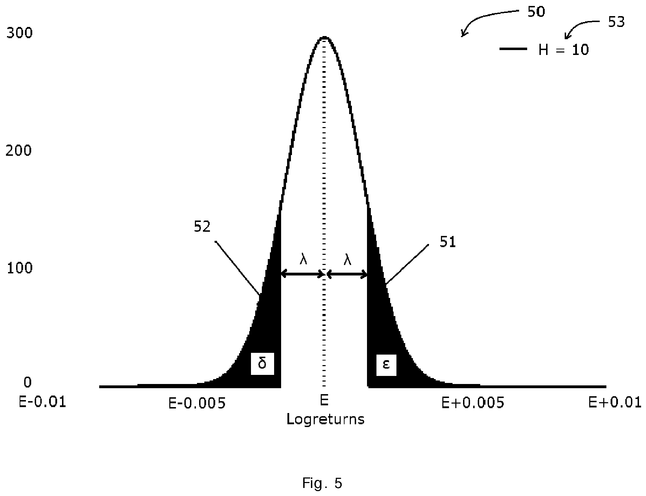

In another preferred embodiment of the invention, said calculating in step (d) involves determining a risk probability δ relating to the probability of said portfolio return being lower than a pre-defined risk probability threshold, said risk probability threshold preferably being a function of said threshold λ, and wherein said calculating in step (d) entails that said risk probability δ adheres to said risk category, preferably that said risk probability δ remains below one of said at least one pre-defined risk parameter value belonging to said assigned risk category. The advantage hereof is that said risk probability δ is a vital parameter in assessing risk, which is moreover intuitive. Indeed, risk adversity of the client may be associated with low values of δ, whereas higher values of δ go together with a willingness of the client to accept a certain degree of risk. Preferably, said risk probability threshold is a function of a measure relating to variance such as said threshold λ, which can be understood also from the example discussed below and illustrated in Fig. 5. In a further preferred embodiment, said risk probability δ is associated with a horizon H, and each threshold value is associated with a horizon value, e.g. 10 days or 20 days.

In yet another preferred embodiment, said calculating in step (d) involves determining a complementary risk probability ε and a trade-off γ, wherein said complementary risk probability ε relates to the probability of said portfolio return being higher than a pre-defined complementary risk probability threshold, said complementary risk probability threshold preferably being a function of said threshold λ; wherein said trade-off γ relates to the ratio of δ and ε, such as γ = δ/(δ+ε); and wherein said calculating in step (d) entails that said trade-off γ adheres to said risk category, preferably that said trade-off γ remains below one of said at least one pre-defined risk parameter value belonging to said assigned risk category. This is advantageous since said trade-off γ provides for a critical and intuitive measure in assessing risk. Particularly, in a preferred embodiment wherein γ = δ/(δ+ε), γ quantifies the balance between two forms of potential. On the one hand, the risk probability δ constitutes the downside potential of an instrument or a portfolio. On the other hand, the complementary risk probability ε concerns the upside potential of an instrument. Typically, both values are low in case of low risk and high in case of high risk. Hereby, the trade-off γ is an indicator associated with willingness of a client to take risk, whereby e.g. γ = 0 corresponds to a safety-first investor who is only worried about the downside risk and is not weighing the risk with upside potential.

In another preferred embodiment, said calculating of said risk-adhering portfolio in step (d) and/or said calculating of said probability distribution in step (d.1) is done with respect to a pre-defined horizon H. This is advantageous because the notion of time scale is inherent to prediction and therefore of prime importance to portfolio optimization and risk assessment.

In a preferred embodiment, said questionnaire comprises a plurality of questions, and said horizon H applied in step (d) and/or step (d.1) is based at least partly on an answer of said client to a question regarding a client horizon preference. This is advantageous because it fits in seamlessly with the overall scope of the present invention, wherein the response of the client with respect to risk is actively used in the calculation of a risk-adhering portfolio. And since the time scale of prediction is critical in assessing risk, it is advantageous to request the client for his/her expectations with regard to time scale, such as a certain horizon value expressed in a number of days.

In yet another preferred embodiment, said at least one pre-defined risk parameter value comprises a value-at-risk equivalent volatility, preferably a value-at-risk equivalent volatility at 97.5% confidence. This is advantageous since it concerns a tested and well-founded criterion to assessing risk, as proposed and validated e.g. in the final draft Regulatory Technical Standards pursuant to the EU Regulation 1286/2014 (PRIIPS). In an alternative embodiment, said value-at-risk equivalent volatility may be replaced by any other volatility-like parameter that takes skew and kurtosis into account.

In another preferred embodiment, said plurality of questions consists of a first plurality of questions relating to a client ability to assume risk and a second plurality of questions relating to a client risk appetite, and wherein a sum of said weights associated with questions belonging to said first plurality is larger than a sum of said weights associated with said second plurality, preferably by at least 10%. This is advantageous because it is found in practice in the context of the present invention that the ability to assume risk is a guiding factor in assessing the risk category that is most suitable for a given client.

In another preferred embodiment, step (d) and/or step (d.1) further comprise retrieving data relating to instrument knowledge from an external feed for enriching said instrument knowledge data present in said database, and wherein said calculating in step (d) and/or step (d.1) is further based on said retrieved data. This is advantageous because information should be up to date and should preferably be updated in real time.

In another preferred embodiment, each of said plurality of risk categories comprises a plurality of descriptive category weights, at least one of said descriptive category weights associated with an exchange-traded fund (ETF) category. This is advantageous because investment advice can adequately be formulated in terms of these categories, adding a vital dimension to the characterization of risk categories.

In another preferred embodiment, said questionnaire comprises a plurality of questions, each of said questions associated with a pre-defined question weight; and wherein said assigning in step (c) is based on at least answers to two of said plurality of questions and their associated question weights.

In another preferred embodiment, the risk-adhering portfolios concern equity portfolios and/or portfolios that are at least partly composed of stocks.

The invention is further described by the following non-limiting examples which further illustrate the invention, and are not intended to, nor should they be interpreted to, limit the scope of the invention.

### Examples

### Example 1: First example embodiment of the system

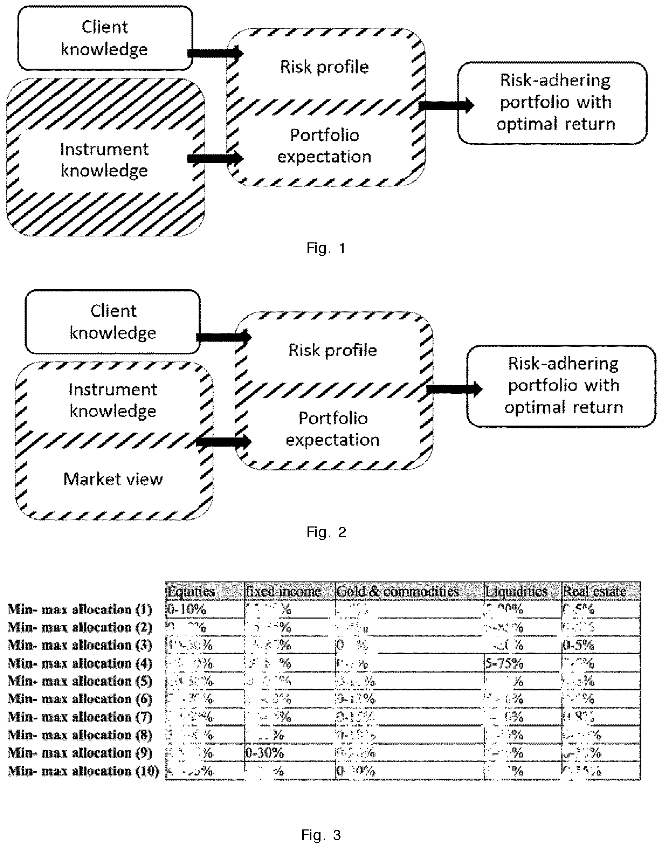

Figure 1 shows a flow chart illustrating a first example embodiment of a system 10 according to the present invention.

The system 10 concerns a computing system for automated investment advice, said computing system comprising
- a server, the server comprising a processor, tangible non-volatile memory, program code present on said memory for instructing said processor;
- at least one computer-readable medium, the at least one computer-readable medium comprising a database, said database comprising investment-related data comprising:
   ∘ instrument knowledge data relating to historical performance of a plurality of financial instruments;
   ∘ client knowledge data relating to client risk, said client knowledge data comprising a questionnaire, said client knowledge data further comprising a plurality of pre-defined risk categories, each risk category comprising at least one pre-defined risk parameter value;
said computing system configured for carrying out a method for calculating a risk-adhering portfolio, said method comprising the steps of:
(a) providing a client with said questionnaire;
(b) receiving a response to said questionnaire from said client;
(c) based on said response, assigning said client to an assigned risk category belonging to said plurality of risk categories;
(d) calculating said risk-adhering portfolio comprising a selection of at least one of said plurality of financial instruments, said calculating based at least on said instrument knowledge data and said assigned risk category;
wherein said calculating in step (d) relates to maximizing an expected value of a portfolio return and/or minimizing an expected risk while adhering to said assigned risk category by comparing a value relating to said risk-adhering portfolio to said at least one pre-defined risk parameter value.

The system comprises various components 11, 12, 13 and 14. The client knowledge component 11 relates to input regarding risk assessment, whereas the investment-related input component 12 relates to input regarding portfolio optimization. The system processing component 13 relates to the processing of both inputs. The risk-adhering portfolio with optimal return component 14 relates to the system output.

The main task of the client knowledge component 11 is to obtain insight in the client's risk preference and tolerance. To this aim, a questionnaire surveys his/her knowledge of and experience with investment products and financial markets, the investment objectives, the financial situation and the risk aversion. The questionnaire is then used to put every client in one of 10 risk categories, each with a specific allowed composition in terms of ETF categories, entailing a specific risk. To deal with the sometimes highly skewed and fat-tail distributions of ETF-returns, risk is measured in terms of Value-at-Risk Equivalent Volatility (VEV). An advantage hereof is that the approach can be extended from a single instrument to portfolio level (portfolio additivity).

The investment-related input component 12 comprises an instrument knowledge sub-component 121. To calculate appropriate portfolios, the system selects appropriate financial instruments according to instrument knowledge out of a highly selected ETF universe. The drivers for this selection are mainly the quality of the assets (measured along many axes, like liquidity, size, physical ETFs only, tracking errors, ratings) and the variety of the final universe (a variety of geographic regions, industrial sectors,...)

For all instruments in the universe, the historical behavior and expected returns are captured mathematically and/or included in the visualization toward the client:
- Expected returns are derived from the market capitalizations of the assets underlying each ETF.
- Risk is captured through VEV, which accounts for skew and kurtosis compared to the traditional volatility.
- The interconnection between the daily returns of the various instruments in scope is captured through a correlation matrix. This matrix is based on history but subsequently categorized and preferably moderated by an internal risk com m ittee.

The system processing component 13 comprises a risk profile sub-component 131 and a portfolio expectation sub-component 132. The risk profile sub-component 131 processes the input of the client knowledge component 11, assigning the client to a certain risk category and/or profile. Hereby, using the Value-at-Risk Equivalent Volatility (VEV) as risk measure requires a heuristic fit to link specific values to a client's profile. The portfolio expectation sub-component 132 pre-processes the input of the instrument knowledge component 121. Together, the risk profile sub-component 131 and a portfolio expectation sub-component 132 handle the calculation of the expected risk/return behavior of every possible portfolio composition, and hence, are able to find portfolios that adhere to a specific risk limit while simultaneously optimizing the return and/or minimizing the portfolio risk. Related, the portfolio expectation may entail both aspects of portfolio return and of portfolio risk.

The risk-adhering portfolio with optimal return component 14 concerns the system output, comprising a risk-adhering portfolio produced by the computing system. Hereby, said risk-adhering portfolio comprises a visualization either on a screen of a client device of said client or on a print-out of data received on said client device of said client. Said risk-adhering portfolio comprises said selection of said at least one of said plurality of financial instruments, said expected return and a description relating to said assigned risk category.

### Example 2: Second example embodiment of the system

Figure 2 shows a flow chart illustrating a second example embodiment of a system according to the present invention. This second example embodiment concerns the same system as the first example embodiment, wherein said step (d) comprises the sub-steps of
(d.1) for each of one or more financial instruments belonging to said plurality of financial instruments, based at least on said instrument knowledge data, calculating one or more moments of a probability distribution associated with an instrument return;
(d.2) calculating said risk-adhering portfolio based at least on the probability distributions calculated in step (d.1) associated with financial instruments belonging to said selection.

Hereby, said step (a) further comprises providing the client with a request for a client market-view preference; wherein said step (b) further comprises receiving said client market-view preference; wherein said calculating in step (d.1) is further based on said client market-view preference, thereby calculating an optimization constraint for each instrument relating to said client market-view preference.

This difference with the first example embodiment corresponds to the market view sub-component 122 comprised in the investment-related input component 12. To allow the client to leverage his own insights in the market, a client can feed these to the algorithm via the market view sub-component 122. The market-view preferences typically relate to relative future expectations and certainties. These elements allow forming an expectation about the future behavior of concrete portfolios (groups of assets with varying weights), which in turn allows for selection of those portfolios with given VEV that maximize the returns. The client's expectations towards the market are captured as indicating that one region/sector/... will outperform. Internally, this is interpreted as a pre-specified increase in returns, with a pre-specified level of belief in these expectations compared to the belief in the equilibrium returns based on market capitalization (this allows easy parameterization of expectations). Subsequently, an algorithm takes the market-view preferences into account in the portfolio optimization, for instance by means of a Black-Litterman approach.

### Example 3: Example relating to risk categories

Figure 3 provides an example illustrating an aspect of the present invention relating to risk categories. Specifically, Figure 3 illustrates a risk categories table 30 as it may be encountered in processing the input of the client knowledge component 11 in the first and second example embodiment explained in the above examples. Based on his/her response to the questionnaire, each client in one of a number of risk categories, 10 in this example. Each of the categories is provided with a specific allowed composition 33, preferably formulated as an interval such as 0-30%, and this for each of a number of ETF categories 31, in this example 5. Each of the categories 32, which may have a number that relates to their ordinal number (1 to 10), relates to a specific risk. As a whole, the risk categories table 30 does not specify an exact relative attribution of different ETF categories to different risk categories 32, but rather sets boundary conditions that are useful to an optimization algorithm, which may comprise a min-max allocation step.

### Example 4: Portfolio universe example

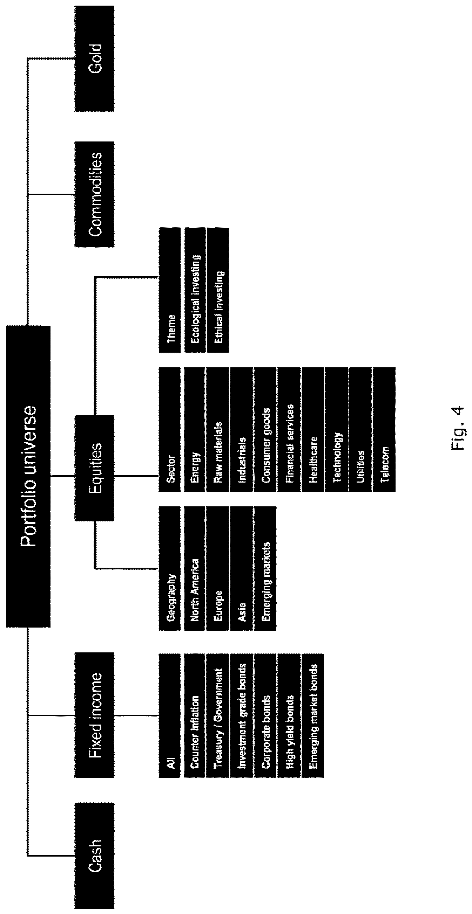

Figure 4 shows an example of a portfolio universe 40 relating to the present invention. The portfolio universe can be displayed as a tree with a root node 41, several first-order leafs 42 and several second-order leafs 43, each of them concerning lists. The portfolio universe is defined for the client, based on his risk profile resulting from the questionnaire, preferably a suitability assessment questionnaire. If desired, the customer can add his/her market-view preference, i.e. his/her external view or own investment flavor into the optimal portfolio by e.g. tilting the portfolio to a certain regio, sector, and/or theme. Tilting is possible on asset level but may also be done on sub-asset level. In case of equities, this may relate to geography, sector or theme, as witnessed by the several second-order leafs 43 for the "Equities" first-order leaf 42.

### Example 5: Example of probability distribution and related parameters

Figure 5 shows an example graph 50 showing a (non-normalized) probability distribution 54, related parameters λ, δ, ε, E and a legend 53 stating the horizon value H equal to 10 days. The distribution may relate to the predicted return of a single financial instrument after a 10 day period but may also relate to the return of an entire portfolio after said 1 à day period. The returns are set out on the x-axis logarithmically, hence the label "Logreturns". In this example, the probability distribution 54 is essentially symmetric with respect to the associated expected value E at the center.

The threshold λ indicates a two-sided deviation with respect to the expected value E, according to some pre-defined confidence percentage. This corresponds to a probability mass contained in the interval [E-λ; E+λ] that is proportional to said confidence percentage. In a preferred embodiment (not shown in Figure 5), the confidence is set at 97.5 %. As such, λ relates to a variance or standard deviation of said financial instrument and/or portfolio return. In a preferred embodiment of the system, said calculating in step (d) entails that said threshold λ adheres to said risk category, preferably that said threshold λ remains below one of said at least one pre-defined risk parameter value belonging to said assigned risk category.

The risk probability δ is proportional to the surface 52, and amounts to the probability of said investment and/or portfolio return being lower than a pre-defined risk probability threshold, in this case equal to E-λ. In a preferred embodiment of the system, said calculating in step (d) entails that said risk probability δ adheres to said risk category, preferably that said risk probability δ remains below one of said at least one pre-defined risk parameter value belonging to said assigned risk category.

The complementary risk probability ε is proportional to the surface 51, and amounts to the to the probability of said portfolio return being higher than a pre-defined complementary risk probability threshold, in this case E+λ. Related, a trade-off γ can be determined as γ = δ/(δ+ε). In a preferred embodiment of the system, said calculating in step (d) entails that said trade-off γ adheres to said risk category, preferably that said trade-off γ remains below one of said at least one pre-defined risk parameter value belonging to said assigned risk category.

## Claims

1. A computing system for automated investment advice, said computing system comprising
- a server, the server comprising a processor, tangible non-volatile memory, program code present on said memory for instructing said processor;
- at least one computer-readable medium, the at least one computer-readable medium comprising a database, said database comprising investment-related data comprising:
∘ instrument knowledge data relating to historical performance of a plurality of financial instruments;
∘ client knowledge data relating to client risk, said client knowledge data comprising a questionnaire, said client knowledge data further comprising a plurality of pre-defined risk categories, each risk category comprising at least one pre-defined risk parameter value;
said computing system configured for carrying out a method for calculating a risk-adhering portfolio, said method comprising the steps of:
(a) providing a client with said questionnaire;
(b) receiving a response to said questionnaire from said client;
(c) based on said response, assigning said client to an assigned risk category belonging to said plurality of risk categories;
(d) calculating said risk-adhering portfolio comprising a selection of at least one of said plurality of financial instruments, said calculating based at least on said instrument knowledge data and said assigned risk category;
wherein said calculating in step (d) relates to maximizing an expected value of a portfolio return and/or minimizing an expected risk while adhering to said assigned risk category by comparing a value relating to said risk-adhering portfolio to said at least one pre-defined risk parameter value.

2. The computing system according to claim 1, wherein said calculating in step (d) involves determining a threshold λ relating to a variance of said portfolio return; and wherein said calculating in step (d) entails that said threshold λ adheres to said risk category, preferably that said threshold λ remains below one of said at least one pre-defined risk parameter value belonging to said assigned risk category.

3. The computing system according to claim 1 or 2, wherein said calculating in step (d) involves determining a risk probability δ relating to the probability of said portfolio return being lower than a pre-defined risk probability threshold, said risk probability threshold preferably being a function of said threshold λ, and wherein said calculating in step (d) entails that said risk probability δ adheres to said risk category, preferably that said risk probability δ remains below one of said at least one pre-defined risk parameter value belonging to said assigned risk category.

4. The computing system according to claim 3, wherein said calculating in step (d) involves determining a complementary risk probability ε and a trade-off γ, wherein said complementary risk probability ε relates to the probability of said portfolio return being higher than a pre-defined complementary risk probability threshold, said complementary risk probability threshold preferably being a function of said threshold λ; wherein said trade-off γ relates to the ratio of δ and ε, such as γ = δ/(δ+ε); and wherein said calculating in step (d) entails that said trade-off γ adheres to said risk category, preferably that said trade-off γ remains below one of said at least one pre-defined risk parameter value belonging to said assigned risk category.

5. The computing system according to claims 1-4, wherein said step (d) comprises the sub-steps of
(d.1) for each of one or more financial instruments belonging to said plurality of financial instruments, based at least on said instrument knowledge data, calculating one or more moments of a probability distribution associated with an instrument return;
(d.2) calculating said risk-adhering portfolio based at least on the probability distributions calculated in step (d.1) associated with financial instruments belonging to said selection.

6. The computing system according to claim 5, wherein said step (a) further comprises providing the client with a request for a client market-view preference; wherein said step (b) further comprises receiving said client market-view preference; wherein said calculating in step (d.1) is further based on said client market-view preference, thereby calculating an optimization constraint for each instrument relating to said client market-view preference.

7. The computing system according to any of the claims 1-6, wherein said calculating of said risk-adhering portfolio in step (d) and/or said calculating of said probability distribution in step (d.1) is done with respect to a pre-defined horizon H.

8. The computing system according to claim 7, wherein said questionnaire comprises a plurality of questions; and wherein said horizon H applied in step (d) and/or step (d.1) is based at least partly on an answer of said client to a question regarding a client horizon preference.

9. The computing system according to any of the claims 1-8, wherein said at least one pre-defined risk parameter value comprises a value-at-risk equivalent volatility, preferably a value-at-risk equivalent volatility at 97.5% confidence.

10. The computing system according to any of the claims 1-9, wherein said questionnaire comprises a plurality of questions, each of said questions associated with a pre-defined question weight; and wherein said assigning in step (c) is based on at least answers to two of said plurality of questions and their associated question weights.

11. The computing system according to claim 10, wherein said plurality of questions consists of a first plurality of questions relating to a client ability to assume risk and a second plurality of questions relating to a client risk appetite, and wherein a sum of said weights associated with questions belonging to said first plurality is larger than a sum of said weights associated with said second plurality, preferably by at least 10%.

12. The computing system according to any of the claims 1 to 11, wherein step (d) and/or step (d.1) further comprises retrieving data relating to instrument knowledge from an external feed for enriching said instrument knowledge data present in said database, and wherein said calculating in step (d) and/or step (d.1) is further based on said retrieved data.

13. The computing system according to any of the claims 1 to 12, wherein each of said plurality of risk categories comprises a plurality of descriptive category weights, at least one of said descriptive category weights associated with an exchange-traded fund category.

14. A risk-adhering portfolio produced by the computing system according to any of the claims 1 to 13, said risk-adhering portfolio comprising a visualization either on a screen of a client device of said client or on a print-out of data received on said client device of said client; said risk-adhering portfolio comprising said selection of said at least one of said plurality of financial instruments, said expected return and a description relating to said assigned risk category.
